# EUROPEAN PATENT APPLICATION

(11) **EP 4 574 519 A1**
(43) Date of publication of application: **25.06.2025**
(21) Application number: 23219717.8
(22) Date of filing: 22.12.2023
(51) Int. Cl.: B60L 3/00

(54) **BATTERY CONNECTION**

(71) Applicant: VOLVO TRUCK CORPORATION, 405 08 Göteborg (SE)
(72) Inventor: LIDSTRÖM, Emil, 423 56 TORSLANDA (SE); THELIN, Tomas, 442 70 KÄRNA (SE); NETTO, Diego Santos Pereira, 436 37 ASKIM (SE)
(74) Representative: Ström & Gulliksson AB

(57) **Abstract**

A computer system comprising processing circuitry is presented. The processing circuitry is configured to obtain a request (**222**) indicating that an electromechanical connector (**25**) arranged to selectively connect at least one battery pack (**100**) to a load (**12**) is to be actuated and, responsive to the request, cause control of a transistor device (**210**) configured to control an electrical connection between the load (**12**), the at least one battery pack (**100**) and the electromechanical connector (**25**) to prevent electrical connection between the electromechanical connector (**25**) and the load (**12**) and/or the at least one battery pack (**100**). The processing circuitry is further configured to, after controlling the transistor device (**210**), cause actuation of the electromechanical connector (**25**) in accordance with the request (**222**).

## Description

### TECHNICAL FIELD

The disclosure relates generally to electrical connections. In particular aspects, the disclosure relates to control of electrical connection in a battery. The disclosure can be applied to vehicles in general, nautical vehicles, heavy-duty vehicles, such as trucks, buses, and construction equipment, among other vehicle types. Although the disclosure may be described with respect to a particular vehicle, the disclosure is not restricted to any particular vehicle.

### BACKGROUND

Electric vehicles (EVs) are becoming increasingly popular. EVs comprise high voltage system for propelling the vehicle. These high voltage systems generally operate at voltages between 300 and 800 volts which is provided by high energy EV batteries. These voltages are significantly higher than voltages used in conventional gasoline-powered vehicles. These high voltage and energies poses a risk of overheating and damages to adjacent devices.

### SUMMARY

According to a first aspect of the disclosure, a computer system comprising processing circuitry is presented. The processing circuitry is configured to: obtain a request indicating that an electromechanical connector arranged to selectively connect at least one battery pack to a load is to be actuated; responsive to the request, cause control of a transistor device configured to control an electrical connection between the load, the at least one battery pack and the electromechanical connector to prevent electrical connection between the electromechanical connector and the load and/or the at least one battery pack; and after controlling the transistor device, cause actuation of the electromechanical connector in accordance with the request. The first aspect of the disclosure may seek to reduce a risk of arc flashes during connection or disconnection of the electromechanical connector. A technical benefit may include reduced wear of the electromechanical connector.

Optionally in some examples, including in at least one preferred example, the request is a request to actuate the electromechanical connector by closing the electromechanical connector and the processing circuitry is further configured to: obtain an indication of the electromechanical connector being closed, and responsive to the indication, control the transistor device to permit electrical connection between the load, the at least one battery pack and the electromechanical connector. A technical benefit may include further reducing a risk of arc flashes.

Optionally in some examples, including in at least one preferred example, the processing circuitry is further configured to cause control of the transistor device to provide a pre-charge current to the load. A technical benefit may include a reduced cost of the energy storage system and/or battery pack as the spacious and expensive pre-charge resistor is no longer required. Also, the pre-charge current may be adaptive and is not set by the fixed pre-charge transistor.

Optionally in some examples, including in at least one preferred example, the processing circuitry is further configured to: obtain an indication of the electromechanical connector being closed by sensing a voltage level above a voltage threshold between the transistor device and the electromechanical connector. A technical benefit may include further reducing a risk of arc flashes.

Optionally in some examples, including in at least one preferred example, the processing circuitry is further configured to: obtain a load current between the at least one battery pack and the load, responsive to the load current being above a first predetermined threshold during a first predetermined time, control the transistor device to prevent electrical connection between the load, the at least one battery pack and the electromechanical connector. A technical benefit may include providing a resettable fuse.

Optionally in some examples, including in at least one preferred example, the transistor device is arranged between the electromechanical connector and the at least one battery pack, forming part of the at least one battery pack. A technical benefit may include providing a battery pack reducing a risk of arc flashes when connected or disconnected.

Optionally in some examples, including in at least one preferred example, the transistor device is arranged between the electromechanical connector and the load, forming part of the load. A technical benefit may include providing a load reducing a risk of arc flashes when connected or disconnected to a battery pack.

Optionally in some examples, including in at least one preferred example, the request is a request to actuate the electromechanical connector by closing the electromechanical connector and the processing circuitry is further configured to: obtain an indication of the electromechanical connector being closed, and responsive to the indication, control the transistor device to permit electrical connection between the load, the at least one battery pack and the electromechanical connector; wherein the processing circuitry is further configured to: obtain an indication of the electromechanical connector being closed by sensing a voltage level above a voltage threshold between the transistor device and the electromechanical connector; wherein the processing circuitry is further configured to: obtain a load current between the at least one battery pack and the load, responsive to the load current being above a first predetermined threshold during a first predetermined time, control the transistor device to prevent electrical connection between the load, the at least one battery pack and the electromechanical connector; wherein the transistor device is arranged between the electromechanical connector and the at least one battery pack, forming part of the at least one battery pack; and wherein the battery pack is a propulsion battery pack for a vehicle. A technical benefit may include further reducing a risk of arc flashes.

According to a second aspect of the disclosure, a battery pack configured to be connected to a load via an electromechanical connector is presented. The battery pack comprising the computer system of the first aspect, at least one battery cell and a transistor device arranged to control an electrical connection between the load and the at least one battery cell. The second aspect of the disclosure may seek to reduce a risk of arc flashes during connection or disconnection of the electromechanical connector. A technical benefit may include reduced wear of the electromechanical connector.

According to a third aspect of the disclosure, an energy storage system configured to be connected to a load via an electromechanical connector is presented. The energy storage system comprising: at least one battery pack; a transistor device configured to control an electrical connection between the load, the at least one battery pack and the electromechanical connector; and the computer system of the first aspect. The third aspect of the disclosure may seek to reduce a risk of arc flashes during connection or disconnection of the electromechanical connector. A technical benefit may include reduced wear of the electromechanical connector.

Optionally in some examples, including in at least one preferred example, the battery pack is the battery pack of the second aspect.

According to a fourth aspect of the disclosure, a vehicle comprising the energy storage system of the third aspect is presented. The fourth aspect of the disclosure may seek to reduce a risk of arc flashes during connection or disconnection of the electromechanical connector. A technical benefit may include reduced wear of the electromechanical connector.

According to a fifth aspect of the disclosure, a computer implemented method is presented. The method comprising: obtaining, by processing circuitry of a computer system, a request indicating that an electromechanical connector arranged to selectively connect at least one battery pack to a load is to be actuated; responsive to the request, cause control of, by processing circuitry of the computer system, a transistor device configured to control an electrical connection between the load, the at least one battery pack and the electromechanical connector to prevent electrical connection between the load, the at least one battery pack and the electromechanical connector; and after controlling the transistor device, causing actuation, by processing circuitry of the computer system, of the electromechanical connector in accordance with the request. The fifth aspect of the disclosure may seek to reduce a risk of arc flashes during connection or disconnection of the electromechanical connector. A technical benefit may include reduced wear of the electromechanical connector.

Optionally in some examples, including in at least one preferred example, the request is a request to actuate the electromechanical connector by closing the electromechanical connector and the method further comprises: obtaining, by processing circuitry of the computer system, an indication of the electromechanical connector being closed, and responsive to the indication, controlling, by processing circuitry of the computer system, the transistor device to permit electrical connection between the load, the at least one battery pack and the electromechanical connector. A technical benefit may include further reducing a risk of arc flashes.

According to a sixth aspect of the disclosure, a computer program product is presented. The computer program product comprises program code for performing, when executed by processing circuitry, the computer implemented method of any one of the fifth aspect. The sixth aspect of the disclosure may seek to reduce a risk of arc flashes during connection or disconnection of the electromechanical connector. A technical benefit may include reduced wear of the electromechanical connector.

According to a seventh aspect of the disclosure, a non-transitory computer-readable storage medium is presented. The non-transitory computer-readable storage medium comprising instructions, which when executed by processing circuitry, cause the processing circuitry to perform the computer implemented method of the fifth aspect. The seventh aspect of the disclosure may seek to reduce a risk of arc flashes during connection or disconnection of the electromechanical connector. A technical benefit may include reduced wear of the electromechanical connector.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a side view of an exemplary vehicle according to an example.
**FIG. 2** is a block diagram of an exemplary vehicle according to an example.
**FIG. 3A** is a block diagram of an exemplary sequential control circuitry according to an example.
**FIG. 3B** is a block diagram of an exemplary sequential control circuitry according to an example.
**FIG. 3C** is a block diagram of an exemplary sequential control circuitry according to an example.
**FIG. 4** is an exemplary time series plot according to an example.
**FIG. 5A** is a schematic of an exemplary semiconductor control circuitry according to an example.
**FIG. 5B** is a block diagram of an exemplary semiconductor control circuitry according to an example.
**FIG. 6A** is a block diagram of an exemplary energy storage system according to an example.
**FIG. 6B** is a block diagram of a computer system according to an example.
**FIG. 6C** is a block diagram of a computer system according to an example.
**FIG. 7** is a flow chart according to an example.
**FIG. 8A** is a block diagram of a method according to an example.
**FIG. 8B** is a block diagram of a method according to an example.
**FIG. 9A** is a block diagram of an exemplary vehicle according to an example.
**FIG. 9B** is a block diagram of an exemplary battery pack according to an example.
**FIG. 10** is a schematic view of a computer program product according to an example.
**FIG. 11** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

As indicated, high voltage systems of electrical vehicles (EVs) require control, maintenance and security measures in place in order to ensure safe operation of the EV. For instance, even when an EV is turned off, there may still be high voltage present in the system and currents flowing from a battery of the EV. This is because batteries and capacitive loads of the EV still retain charge and there may be cooling circuitry etc. running for a period of time after EV is turned off.

In order to ensure safety of persons inside, or at a vicinity of a vehicle, numerous safety measures are generally in place such as automatic high voltage disconnect (AHVD) systems. The AHVD system will disconnect the battery from the rest of the vehicle in the event of an accident or other emergency. AHVD systems can be triggered by a variety of events, such as vehicle collisions, rollover accidents, fire, electrical problems, overheating, software glitches etc. Some AHVD systems can also be triggered manually, using a switch or button located in the vehicle. This can be useful for first responders who need to disconnect the battery pack before working on a damaged EV. Once triggered, the AHVD system generally requires professional service of the vehicle in order to be reset.

Further to the AHVD systems, electrical current paths of vehicles are generally provided with fuses configured to break in case of over currents. An issue with such fuses are that they are generally one-shots and once triggered, they have to be replaced. Such overcurrent protection fuses generally works by melting a metal strip when too much current flows through it.

In EVs, it is common to provide a mechanical connector between batteries of the EV and a load. These mechanical connector are commonly electromechanical connector such that opening and closing of the connector may be automatically controlled.

In situations where a current flows between the battery of the EV and the load, a mechanical disconnection of the battery may cause damage to the connector. When a circuit carrying a large current is broken, an arc (sometimes called arc flashes) may form between the separating contacts. Such arcs may damage a mechanical connector or even weld the mechanical connector. Mechanical switches may experience wear and erosion due to the high current levels. Over time, this wear may compromise the integrity of the mechanical contact, leading to increased resistance, overheating, and potential failure. Breaking a current carrying circuit may involve substantial mechanical forces during the breaking process. The mechanical stress on the switching components may lead to fatigue and failure over time. In a longer perspective, materials used in the mechanical contacts may release hazardous substances or contribute to environmental pollution when subjected to arcing.

Correspondingly, during a mechanical connection of the battery to the load, capacitances of the load may be charged causing significant inrush currents. This is due to a voltage at the load generally being significantly lower than a voltage of the battery (due to e.g. self-discharge of the load). High inrush currents during closing of the mechanical connector will present corresponding risks as those presented when mechanically breaking a current carrying circuit, i.e. arc flashes.

The present disclosure presents a control circuitry that, in a controlled manner, reduces a risk that a current is flowing between the battery and the load when before a mechanical connector is completely opened (substantially infinite resistance) or closed (substantially zero resistance). This significantly increase a lifetime of the mechanical connector.

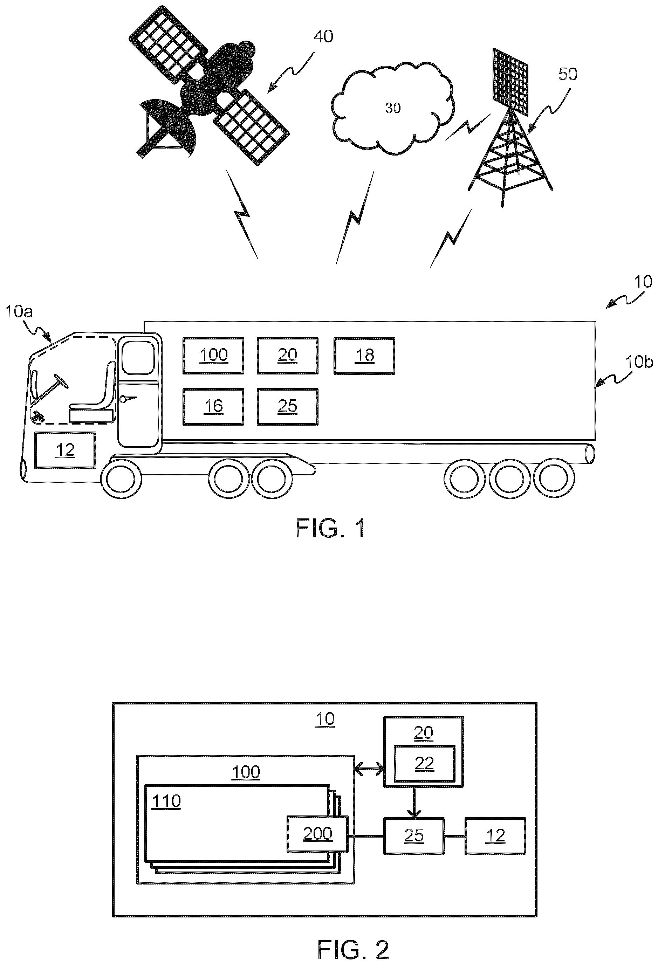

Although the sequential control circuitry of the present disclosure may be applied to any electric circuitry, examples and embodiments will be given mainly in reference to a vehicle **10,** see **FIG. 1. FIG. 1** is an exemplary schematic side view of a heavy-duty vehicle **10** (hereinafter referred to as vehicle **10**). The vehicle **10** comprises a tractor unit **10a** which is arranged to tow a trailer unit **10b.** In other examples, other vehicles may be employed, e.g., trucks, buses, nautical vehicles and construction equipment. The vehicle **10** comprises all vehicle units and associated functionality to operate as expected, such as a powertrain, chassis, and various control systems. The vehicle **10** comprises one or more propulsion sources **12.** The propulsion source **12** may be any suitable propulsion source **12** exemplified by, but not limited to, one or more or a combination of an electrical motor, a combustion engine such as a diesel, gas or gasoline powered engine. The vehicle **10** further comprises an energy source **100** suitable for providing energy for the propulsion source **12.** That is to say, if the propulsion source **12** is an electrical motor, a suitable energy source **100** would be a battery or a fuel cell. The vehicle **10** further comprises sensor circuitry **16** arranged to detect, measure, sense or otherwise obtain data relevant for operation of the vehicle **10.** The sensor circuit **16** may comprise one or more of a voltmeter, a current meter, an accelerometer, a gyroscope, a wheel speed sensor, an ABS sensor, a throttle position sensor, a fuel level sensor, a temperature sensor, a pressure sensor, a rain sensor, a light sensor, proximity sensor, a lane departure warning sensor, a blind spot detection sensor, a TPMS sensor etc. Operational data relevant for operation of the vehicle **10** may include, but is not limited to, one or more of a speed of the vehicle **10,** a weight of the vehicle **10,** an inclination of the vehicle **10,** a status of the energy source **100** of the vehicle **10** (state of charge, fuel level etc.), a current speed limit of a current road travelled by the vehicle **10,** etc. The vehicle **10** may further comprise communications circuitry **18** configured to receive and/or send communication. The communications circuitry **18** may be configured to enable the vehicle **10** to communicate with one or more external devices or systems such as a cloud server 30. The communication with the external devices or systems may be directly or via a communications interface such as a cellular communications interface **50,** such as a radio base station. The cloud server **30** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The communication circuitry **18** may, additionally or alternatively, be configured to enable the vehicle **10** to be operatively connected to a Global Navigation Satellite System (GNSS) **40** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **10** may be configured to utilize data obtain from the GNSS **40** to determine a geographical location of the vehicle **10.**

The exemplary vehicle **10** of **FIG. 1** is an electrical vehicle (EV) which is to mean a vehicle **10** at least partially propellable by an electrical propulsion source **12,** preferably an electrical motor **12.** The electrical motor **12** is powered by one or more battery packs **100.** The vehicle **10** further comprise an energy storage system **20,** sometimes referred to as a battery management system **20.** The energy storage system **20** is configured to monitor and/or control operation of the one or more battery packs **100.** The vehicle **10** further comprise an electromechanical connector **25** arranged to selectively connect the battery pack **100** to the electrical motor **12,** i.e. the load **12.**

In **FIG. 2****,** a partial block diagram of a vehicle **10** according to the present disclosure is shown. The vehicle **10** comprises a battery pack **100,** an electromechanical connector **25,** a load **12** in the form of an electrical motor **12,** and an energy storage system **20.** The electromechanical connector **25** is arranged to control an electrical connection between the load **12** and the battery pack **100.** In **FIG. 2****,** the energy storage system **20** is operatively connected to the battery pack **100** and is arranged to control the electromechanical connector **25.** To this end, the energy storage system **20** comprises energy storage system processing circuitry **22.** In some examples, the energy storage system **20** comprise a battery pack **100.** An energy storage system **20** not comprising a battery pack **100** may sometimes be referred to as an energy storage control system.

Generally, the electromechanical connector **25** is provided to allow a controlled disconnect of the battery pack **100** prior to service, replacement or other maintenance of the battery pack **100** and/or vehicle **10.** An electromechanical connector **25** is to mean any connector that galvanically breaks a current path responsive to electrical controls. One example of an electromechanical connector **25** may be a relay. In some examples, the electromechanical connector **25** may be a motorized connector controllable to move e.g. a connecter in and out of galvanic contact with poles of a battery pack **100.**

The battery pack **100** in **FIG. 2** comprise a plurality of battery cells **110.** This is one example, and in other examples, the battery pack **100** comprise only one battery cell **110.** The battery cells **110** may be connected in series to allow the battery pack **100** to provide a voltage higher than a voltage of each of the battery cells **110.** The battery cells **110** may be connected in parallel to allow the battery pack **100** to provide a capacitance that is higher than a capacitance of each of the battery cells **110.** In some examples, the battery pack **100** comprises a plurality of sets of battery cells **110.** Battery cells **110** of each set of battery cells are connected in series and the sets of battery cells are connected in parallel to provide both an increased voltage and capacitance from the battery pack **100** compared to what is offer by a single battery cell **110.** Regardless of how the battery cells **110** are connected, the battery pack **100** may comprise a sequential control circuitry **200.** The sequential control circuitry **200** may be connected in any current path of the battery pack **100.** In the following, the sequential control circuitry **200** will be described as arranged in a current path between the battery cells **110** of the battery pack **100** and the electromechanical connector **25.** However, the sequential control circuitry **200** may very well be arranged between the electromechanical connector **25** and the load **12.** It should be mentioned that although the load **12** is referenced as a propulsion source of the vehicle **10,** the load may very well be a non-propulsion load and the battery pack **100** a non-propulsion battery such as a 12 V or 24 V battery pack **100.**

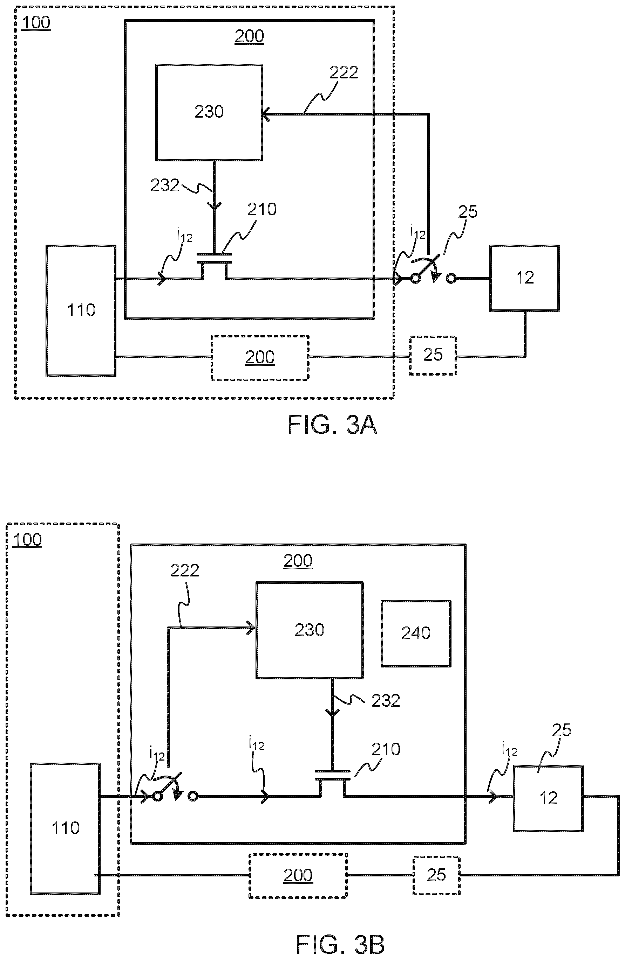

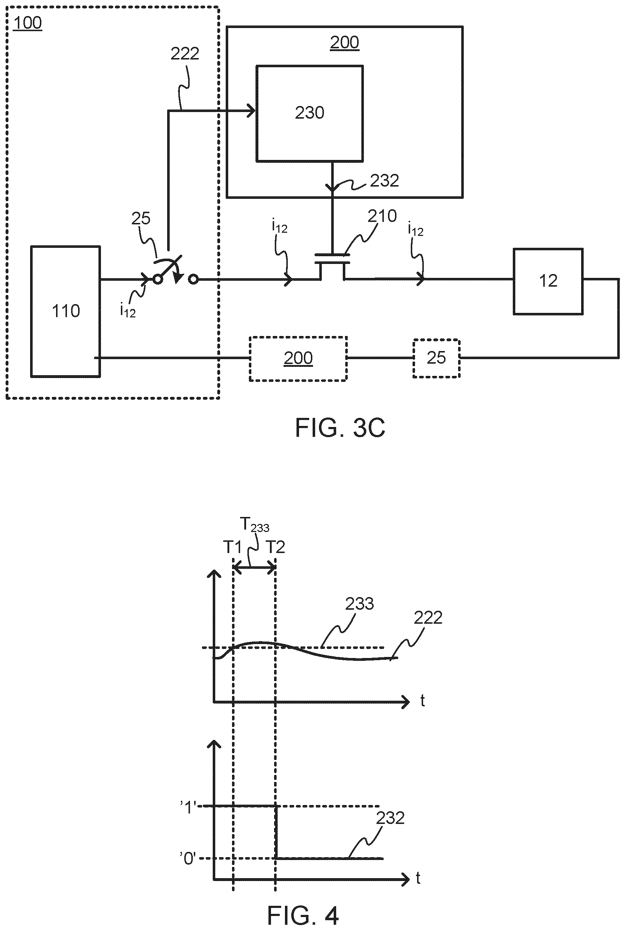

In **FIG. 3A, FIG. 3B** and **FIG. 3C****,** block diagrams of exemplary sequential control circuitry **200** connected in series between one or more battery cells **110** and a load **12** are shown. The sequential control circuitry **200** of **FIG. 3A, FIG. 3B** and **FIG. 3C** differ in their respective compositions, but corresponding functionalities and effects are provided by the different sequential control circuitry **200.** The sequential control circuitry **200** comprises a semiconductor control circuitry **230,** is operatively connected to, or comprises, an electromechanical connector **25** and is operatively connected to, or comprises, a transistor device **210.**

In **FIG. 3A, FIG. 3B** and **FIG. 3C****,** the transistor device **210** is arranged to control an electrical connection between the battery cell **110** and the load **12.** The transistor device **210** may be any suitable transistor device **210** exemplified by, but not limited to, a bipolar junction transistor (BJT), a field-effect transistor (FET) (e.g. junction FET, metal-oxide-semiconductor FET, metal-semiconductor FET), an insulated gate bipolar transistors (IGBT), a heterojunction bipolar transistor (HBT), etc. The selection of the particular type of transistor device **210** will generally depend on design parameters such as expected current handling capabilities (continuous current, breakable current etc.), voltage handling capabilities, switching speed etc.

The semiconductor control circuitry **230** is configured to control the transistor device **210.** The semiconductor control circuitry **230** is configured to provide a control signal **232** for control of the transistor device **210.** The control signal **232** is configured to control the transistor device **210** to conduct, i.e. close the electrical connection between the battery cell **110** and the load **12,** or not to conduct, i.e. break the electrical connection between the battery cell **110** and the load **12.** The semiconductor control circuitry **230** is configured to control the transistor device **210** based on state data **222** indicating a state change of the electromechanical connector **25.** To this end, the semiconductor control circuitry **230** is operatively connected to the electromechanical connector **25** and configured to obtain state data **222** from the electromechanical connector **25.** The state data **222** may be any suitable representation of a state change of the electromechanical connector **25,** such as a voltage level, serial data, parallel data, voltage transitions etc. The state data **222** may be generated as part of control signals for controlling the electromechanical connector **25.** Additionally, or alternatively, the state data **222** may be generated responsive to handling of devices, components or members indicating that the battery pack **100** is to be connected or disconnected. Such devices may be a handle of the battery pack **100,** a cover for the battery pack **100** or the energy storage system **20.** In some examples, state data **222** may be generated responsive to a hood of the vehicle **10** being opened. In some examples, state data **222** may be generated by an operator indicating that a battery pack **100** is about to be connected or disconnected.

In **FIG. 3A****,** the transistor device **210** is arranged between the electromechanical connector **25** and the load **12.** In **FIG. 3A****,** the battery pack **100** comprises the sequential control circuitry **200** and the transistor device **25,** the electromechanical connector **25** is arranged between the battery pack **100** and the load **12.**

In **FIG. 3B****,** the transistor device **210** is arranged between the electromechanical connector **25** and the battery cell **110.** In **FIG. 3B****,** the sequential control circuitry **200** is arranged between the battery pack **100** and the load **12.** In **FIG. 3B****,** the sequential control circuitry **200** comprises the transistor device **210** and the electromechanical connector **25.** As seen in **FIG. 3B****,** the sequential control circuitry **200** may comprise an internal power source **240.** The internal power source **240** is only illustrated in **FIG. 3B****,** but may very well be provided in any other example of the sequential control circuitry **200.** The internal power source **240** may be any suitable power source **240** capable of providing power to the sequential control circuitry **200.** The internal power source **240** may be one or more of a non-rechargeable battery, a rechargeable battery, a capacitor or a super-capacitor. In case of a rechargeable internal power source **240,** the internal power source **240** may be charged from the battery cell **110** and/or any other external charger. The internal power source **240** may be a removable internal power sources **240.** The internal power source **240** enables the sequential control circuitry **200** to function even if no external power is available to the sequential control circuitry **200.**

It should be mentioned that, regardless if the sequential control circuitry **200** comprise the internal power source **240** or not, the sequential control circuitry **200** and the semiconductor control circuitry **230** are preferably configured such that no power is consumed in controlling the transistor device **210** to its open state, this may be referred to a normally open (NO) configuration. Such configuration ensures that the transistor device **210** would be at its open state unless actively driven to close.

In **FIG. 3C****,** the transistor device **210** is arranged between the electromechanical connector **25** and the load **12.** In **FIG. 3C****,** the battery pack **100** comprise the electromechanical connector **25** and the transistor device **210** and sequential control circuitry **200** are stand alone.

In **FIG. 3A, FIG. 3B** and **FIG. 3C****,** exemplary arrangements and compositions of the battery pack **100,** the sequential control circuitry **200,** the electromechanical connector **25** and the transistor device **210** have been shown. These are but examples and further arrangements and compositions may come to mind after reading the present disclosure, these compositions are arrangements are, as the skilled person will appreciate, also to be considered part of the present disclosure.

In other examples, transistor device **210** may be arranged both between the electromechanical connector **25** and the load **12,** and between the electromechanical connector **25** and the battery cell **110.**

As seen in **FIG. 3A, FIG. 3B** and **FIG. 3C****,** the transistor device **210** may be provided in either an output and/or a return current path between the battery cell(s) **110** and the load **12.** The electromechanical connector **25** may be provided in either an output and/or a return current path between the battery cell(s) **110** and the load **12.**

In some examples, the sequential control circuitry **200** is configured to obtain a load current ***i*₁₂**, i.e. a current into the load **12** or into (in case of charging) the battery pack **100.** The load current ***i*₁₂** may be obtained from the previously mentioned sensor circuit **16** of the vehicle **10.** The voltage drop across the transistor device **210** may be utilized together with a known on-resistance of the transistor device **210** to determine the load current ***i*₁₂** by Ohm's law. The on-resistance may, depending on the type of transistor device, vary with temperature, control current, voltage, etc. of the transistor device **210** which is known in the art. Obtaining the load current ***i*₁₂** enables the sequential control circuitry **200** control the transistor device to act as a resettable fuse.

In **FIG. 4****,** exemplary time signal plots of the control signal **232** (lower graph) and the load current ***i*₁₂** (upper graph) are shown in reference to an aligned a common time axis t. As seen in the upper graph, at a first point in time **T1**, the load current ***i*₁₂** exceeds a first predetermined threshold **233.** However, as seen in the lower graph of **FIG. 4****,** the control signal **232** remains at an active or high state indicated by '1' in **FIG. 4****.** It should be noted that the naming of the e.g. the control signal **232** suggests that the transistor device **210** is active (conducting) responsive to a high control signal **232** but this is but one example and adjusting plots, circuitry, examples and embodiments of the present disclosure to be active at a low control signal **232** is, after having digested the teachings of the present disclosure, well within the knowledge of the skilled person. At a second point in time **T2,** the load current ***i*₁₂** has exceeded the first predetermined threshold **233** for a first predetermined time ***T*₂₃₃.** It is not until the second point in time **T2** that the control signal **232** toggles to an inactive or low state indicated by '0' in **FIG. 4****,** i.e. breaks the current path between the battery cell **110** and the load **12.** Delaying the deactivation of the transistor device **210** by the first predetermined time ***T*₂₃₃** enables triggering not only based on an absolute over current, or an amount of over energy which is the case with one-shot fuses. A one-shot fuse would generally trigger by breaking a conductor inside the one-shot fuse due to heating of the conductor. The heating of the conductor will depend on an amount of current and a time it takes for a one-shot fuse to trigger will depend on a magnitude of the overcurrent. Further, repeated current peaks above a threshold current may heat the one-shot fuse and cause it to trigger after a time. The delayed activation as presented in **FIG. 4** will always trigger after the load current ***i*₁₂** exceeding the first predetermined threshold **233** (or an indication of the load current ***i*₁₂** exceeding the first predetermined threshold **233**) for the first predetermined time ***T*₂₃₃**, regardless of how much or little or much load current ***i*₁₂** (or the indication of the load current ***i*₁₂**) exceeds the first predetermined threshold **233.**

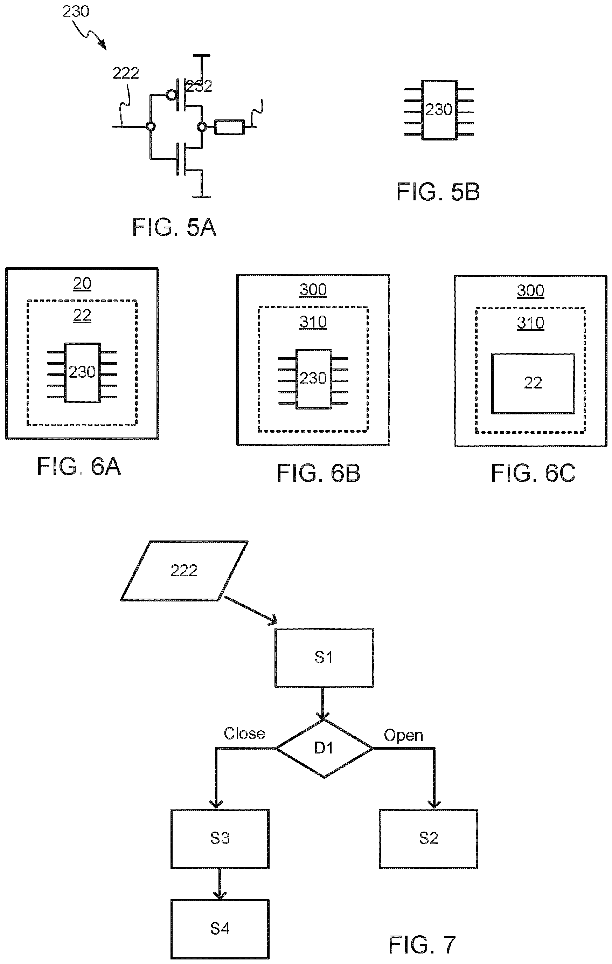

In **FIG. 5A** and **FIG. 5B****,** different implementations of the semiconductor control circuitry **230** is shown. In **FIG. 5A****,** the semiconductor control circuitry **230** is implemented as semiconductor push-pull drive circuitry **230.** The commonly known push-pull architecture of the semiconductor push-pull drive circuitry **230** comprises two complementary transistor devices. These transistors operate in tandem to drive the control signal **232** quickly and efficiently. The semiconductor push-pull drive circuitry **230** configuration is but one example and alternative electric circuitry and dedicated driver ICs may very well be employed to control the transistor device **210.** In **FIG. 5B****,** the semiconductor control circuitry **230** is implemented as semiconductor control processing circuitry **230.** The semiconductor control circuitry **230** of may comprise both the semiconductor push-pull drive circuitry **230** of **FIG. 5A** and the semiconductor control processing circuitry **230** of **FIG. 5B** such that the semiconductor control circuitry **230** comprise both processing circuitry and drive electronics.

The processing part of the semiconductor control circuitry **230,** which may be the whole semiconductor control circuitry **230,** may form part of a computer system **300.** The computer system **300** comprise processing circuitry **310,** and the semiconductor control processing circuitry **230** may for part of the processing circuitry **310** of the computer system **300.**

In **FIG. 6A****,** an energy storage system **20** is shown. The energy storage system processing circuitry **22** comprises the semiconductor control circuitry **230.** In **FIG. 6B** and **FIF. 5C,** a computer system **300** comprising processing circuitry **310** is shown. In **FIG. 6B****,** the processing circuitry **310** comprise the semiconductor control circuitry **230,** and in **FIG. 6C****,** the processing circuitry **310** comprise the energy storage system processing circuitry **22** (which may comprise the semiconductor control circuitry **230**).

In **FIG. 7****,** a flowchart for controlling connection and disconnection of a battery pack **100** to/from a load **12** is shown. The steps of the flowchart may be performed by the semiconductor control circuitry **230.** A first step **S1** is initiated by reception of state data **222** indicating that the electromechanical connector **25** is about to change state. At the first step **S1,** the transistor device **210** is controlled to open, i.e. stop conducting and preventing current from flowing through the electromechanical connector **25.** The state data **222** is processed to, at a first decision step **D1,** determine if the actuation indicated by the state data **222** is opening or closing of the electromechanical connector **25.** If the state data **222** indicate opening of the electromechanical connector **25,** the flow proceeds to a second step **S2.** At step **S2,** the electromechanical connector **25** is controlled to open. If the state data **222** indicate closing of the electromechanical connector **25,** the flow proceeds to a third step **S3.** At step **S3,** the electromechanical connector **25** is controlled to close. When the electromechanical connector **25** is closed, the flow moves to a fourth step **S4** where the transistor device **210** is controlled to close, i.e. start conducting and permit current from flowing through the electromechanical connector **25.** The fourth step **S4** may comprise controlling the transistor device **210** to partly open in order to limit an inrush current to the load **12.** In some examples, the fourth step **S4** comprises controlling the transistor device **210** by pulse width modulation (PWM) to limit an inrush current to the load **12.**

To ensure that the electromechanical connector **25** is truly closed when e.g. transitioning form the third step **S3** to the fourth step **S4,** sensor circuitry **16** may be configured to detect that the electromechanical connector **25** is fully closed. In examples where the semiconductor device **210** is arranged between the electromechanical connector **25** and the load **12,** such detection may be provided by detecting a voltage at an end of the electromechanical connector **25** being distal from the battery pack **100** (if the electromechanical connector **25** is closed, the battery voltage will be present also at the distal end of the electromechanical connector **25**). In examples where the semiconductor device **210** is arranged between the electromechanical connector **25** and the battery pack **100,** such detection may be provided by applying voltage at one end of the electromechanical connector **25** and detecting the voltage at the opposite end of the electromechanical connector **25.** Alternatively, or additionally, the transistor device **210** may be controlled to operate at a current limiting mode where e.g. PWM control or linear control is employed to limit a current through the transistor device **210.** The latter example may be combined with sensor circuitry **16** configured to detect the voltage at an end of the electromechanical connector **25** being distal from the battery pack **100** or a current into the electromechanical connector **25.** The voltage may be detected by comparing the obtained voltage to a threshold, if the obtained voltage is above the threshold, the electromechanical connector **25** is determined to be closed.

Generally, if the load **12** comprises an electrical motor with associated control circuitry such as inverters etc., the load **12** will exhibit a substantial capacitance to a battery pack **100** and/or battery cells **110** connected to the load **12.** If the capacitances of the load **12** are substantially discharged, the capacitances of the load **12** will cause a significant inrush current upon connection of the battery pack **100** to the load **12.** To reduce a magnitude of the inrush current, the electrical current path between the battery pack **100** and/or battery cells 110 may be provided with a selectively connectable pre-charge circuitry. The pre-charge circuitry generally comprise at least one switch arranged to selectively connect a pre-charge resistor in a current path between the battery cells **110** and the load **12** or to bypass the pre-charge resistor. However, the pre-charge resistor is a comparably expensive component as it is required to dissipate significant amount of heat in order to keep a time for pre-charge short which means that pre-charge resistors are generally both large and expensive. However, as indicated with reference to e.g. **FIG. 3A, FIG. 3B** or **FIG. 3C****,** the sequential control circuitry **200** of the present disclosure may be configured to control and limit the load current ***i*₁₂**. To this end, sequential control circuitry **200** provide a pre-charge functionality, i.e. limit the load current ***i*₁₂** by PWM or linear control of the transistor device **210.** In other words, the sequential control circuitry **200** and the semiconductor control circuitry **230** may be configured to replace a pre-charge resistor between battery cells **110** and a load **12.** The sequential control circuitry **200** may consequently reduce a cost of a battery pack **100,** a energy storage system **20** and/or a vehicle **10** depending on where a pre-charge resistor would have been arranged.

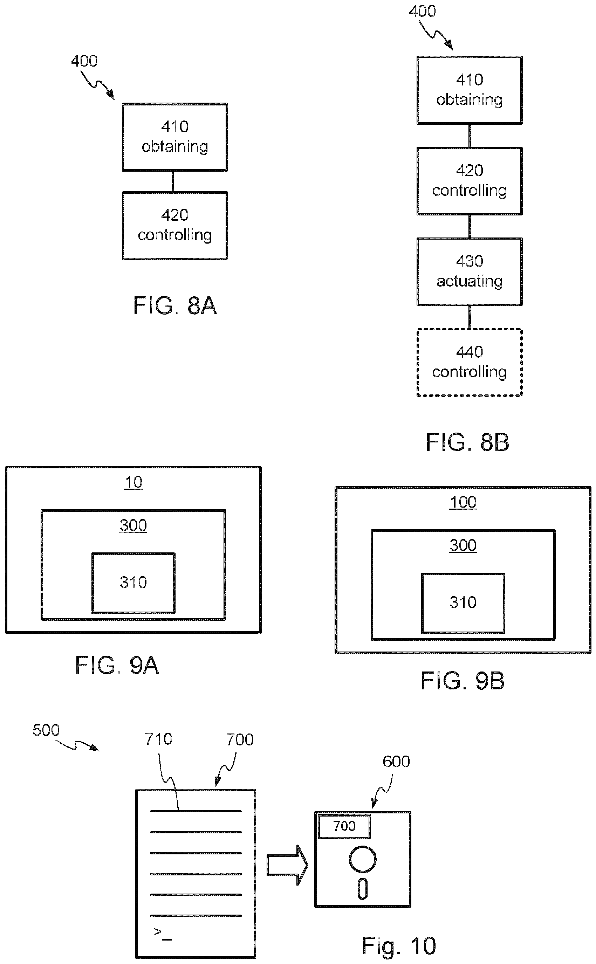

In **FIG. 8A** and **FIG. 8B****,** a schematic views of examples of a method **400** according to the present disclosure is shown. The method **600** may be a computer implemented method **600** performed by e.g. the semiconductor control processing circuitry **230,** the energy storage system processing circuitry **22** or the processing circuitry **310** of the computer system **300.**

The method **400** in n **FIG. 8A** may be performed by the semiconductor control circuitry **230** of **FIG. 5A** or **FIG. 5B****.** The method **400** comprises obtaining **410** a request **222** indicating that the electromechanical connector **25** is to be actuated. The method **400** further comprises, responsive to the request **222** controlling the transistor device **210** to open, i.e. stop conducting. This means that, depending on where the transistor device **210** is arranged, electrical connection either between the electromechanical connector **25** and the battery pack **100** or between the electromechanical connector **25** and the load **12** is prevented by the transistor device **210.** Regardless if the request **222** indicates that the electromechanical connector **25** is to be opened or closed, this may be done without risk of arc flashes as the open transistor device **210** prevents current from flowing through the electromechanical connector **25.**

The method **400** in n **FIG. 8B** may be partly performed by the semiconductor control circuitry **230** of **FIG. 5A** or wholly by the semiconductor control circuitry **230** of **FIG. 5B****.** The method **400** comprises causing obtaining **410** of, or obtaining, a request **222** indicating that the electromechanical connector **25** is to be actuated. The method **400** further comprises, responsive to the request **222** controlling **420,** or causing control of, the transistor device **210** to open, i.e. stop conducting. This means that, depending on where the transistor device **210** is arranged, electrical connection either between the electromechanical connector **25** and the battery pack **100** or between the electromechanical connector **25** and the load **12** is prevented by the transistor device **210.** The method **400** further comprises actuating **430,** or causing actuation of, the electromechanical connector **25** as indicated by the request **222.** This means that, if the request **222** indicates opening of the electromechanical switch **25,** actuating **430** the electromechanical connector **25** comprises opening (or causing opening of) the electromechanical switch **25.** Further, if the request **222** indicates closing of the electromechanical switch **25,** actuating **430** the electromechanical connector **25** comprises closing (or causing closing of) the electromechanical switch **25.** Optionally, if the request **222** indicates closing of the electromechanical switch **25,** the method **400** may further comprise, after closing of the electromechanical connector **25,** controlling **440,** or causing control of, the transistor device **210** to close, i.e. to permit current to flow through the electromechanical connector **25.**

The method **400** presented with reference to **FIG. 8B** may very well me expanded to include any suitable example, feature or effect presented herein.

The computer system **300** previously presented, or rather the processing circuity **310** of the computer system **300** is advantageously configured to perform the method **400.** In **FIG. 9A****,** a vehicle **10** comprising the computer system **300** is shown and in **FIG. 9B****,** a battery pack **100** comprising the computer system **300** is shown.

In **FIG. 10** a computer program product **500** is shown. The computer program product **500** comprises a computer program **700** and a non-transitory computer readable medium **600.** The computer program **700** may be stored on the computer readable medium **600.** The computer readable medium **600** is, in **FIG. 10****,** exemplified as a vintage 5,25" floppy disc, but may be embodied as any suitable non-transitory computer readable medium such as, but not limited to, hard disk drives (HDDs), solid-state drives (SSDs), optical discs (e.g., CD-ROM, DVD-ROM, CD-RW, DVD-RW), USB flash drives, magnetic tapes, memory cards, Read-Only Memories (ROM), network-attached storage (NAS), cloud storage etc.

The computer program **700** comprises instruction **710** e.g. program instruction, software code, that, when executed by processing circuitry cause the processing circuitry to perform the method **400** introduced with reference to **FIG. 8A** or **FIG. 8B****.**

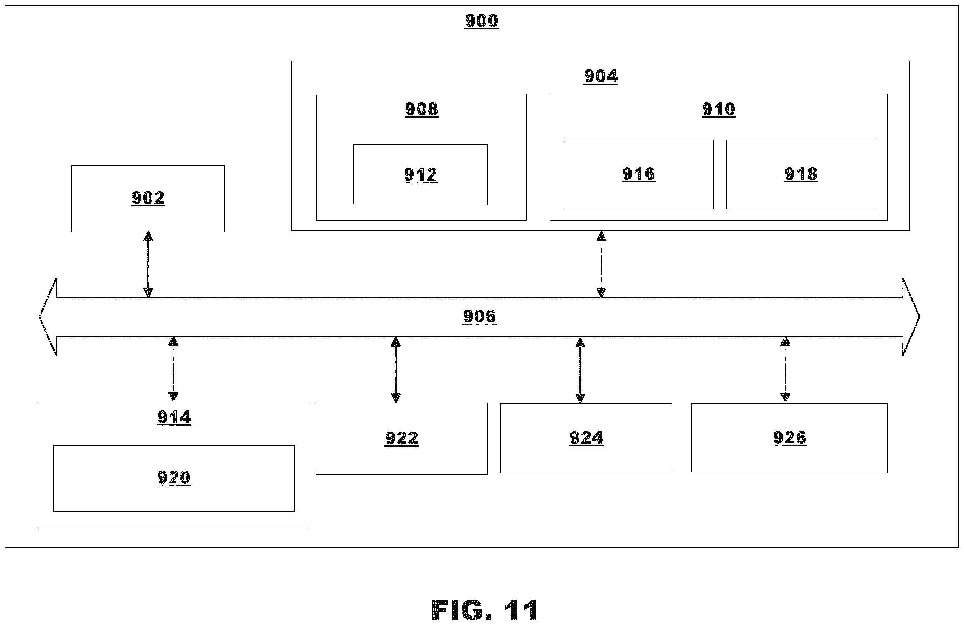

**FIG. 11** is a schematic diagram of a computer system **900** for implementing examples disclosed herein. The computer system **900** is adapted to execute instructions from a computer-readable medium to perform these and/or any of the functions or processing described herein. The computer system **900** may be connected (e.g., networked) to other machines in a LAN, an intranet, an extranet, or the Internet. While only a single device is illustrated, the computer system **900** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **900** may comprise at least one computing device or electronic device capable of including firmware, hardware, and/or executing software instructions to implement the functionality described herein. The computer system **900** may include processing circuitry **902** (e.g., processing circuitry including one or more processor devices or control units), a memory **904,** and a system bus **906.** The computer system **900** may include at least one computing device having the processing circuitry **902.** The system bus **906** provides an interface for system components including, but not limited to, the memory **904** and the processing circuitry **902.** The processing circuitry **902** may include any number of hardware components for conducting data or signal processing or for executing computer code stored in memory **904.** The processing circuitry **902** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **902** may further include computer executable code that controls operation of the programmable device.

The system bus **906** may be any of several types of bus structures that may further interconnect to a memory bus (with or without a memory controller), a peripheral bus, and/or a local bus using any of a variety of bus architectures. The memory **904** may be one or more devices for storing data and/or computer code for completing or facilitating methods described herein. The memory **904** may include database components, object code components, script components, or other types of information structure for supporting the various activities herein. Any distributed or local memory device may be utilized with the systems and methods of this description. The memory **904** may be communicably connected to the processing circuitry **902** (e.g., via a circuit or any other wired, wireless, or network connection) and may include computer code for executing one or more processes described herein. The memory **904** may include non-volatile memory **908** (e.g., read-only memory (ROM), erasable programmable read-only memory (EPROM), electrically erasable programmable read-only memory (EEPROM), etc.), and volatile memory **910** (e.g., random-access memory (RAM)), or any other medium which can be used to carry or store desired program code in the form of machine-executable instructions or data structures and which can be accessed by a computer or other machine with processing circuitry **902.** A basic input/output system (BIOS) **912** may be stored in the non-volatile memory **908** and can include the basic routines that help to transfer information between elements within the computer system **900.**

The computer system **900** may further include or be coupled to a non-transitory computer-readable storage medium such as the storage device **914,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **914** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **914** and/or in the volatile memory **910,** which may include an operating system **916** and/or one or more program modules **918.** All or a portion of the examples disclosed herein may be implemented as a computer program **920** stored on a transitory or non-transitory computer-usable or computer-readable storage medium (e.g., single medium or multiple media), such as the storage device **914,** which includes complex programming instructions (e.g., complex computer-readable program code) to cause the processing circuitry **902** to carry out actions described herein. Thus, the computer-readable program code of the computer program **920** can comprise software instructions for implementing the functionality of the examples described herein when executed by the processing circuitry **902.** In some examples, the storage device **914** may be a computer program product (e.g., readable storage medium) storing the computer program **920** thereon, where at least a portion of a computer program **920** may be loadable (e.g., into a processor) for implementing the functionality of the examples described herein when executed by the processing circuitry **902.** The processing circuitry **902** may serve as a controller or control system for the computer system **900** that is to implement the functionality described herein.

The computer system **900** may include an input device interface **922** configured to receive input and selections to be communicated to the computer system **900** when executing instructions, such as from a keyboard, mouse, touch-sensitive surface, etc. Such input devices may be connected to the processing circuitry **902** through the input device interface **922** coupled to the system bus **906** but can be connected through other interfaces, such as a parallel port, an Institute of Electrical and Electronic Engineers (IEEE) 1394 serial port, a Universal Serial Bus (USB) port, an IR interface, and the like. The computer system **900** may include an output device interface **924** configured to forward output, such as to a display, a video display unit (e.g., a liquid crystal display (LCD) or a cathode ray tube (CRT)). The computer system **900** may include a communications interface **926** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1. A computer system **300** comprising processing circuitry **310** configured to: obtain a request **222** indicating that an electromechanical connector **25** arranged to selectively connect at least one battery pack **100** to a load **12** is to be actuated; responsive to the request, cause control of a transistor device **210** configured to control an electrical connection between the load **12,** the at least one battery pack **100** and the electromechanical connector **25** to prevent electrical connection between the electromechanical connector **25** and the load **12** and/or the at least one battery pack **100;** and after controlling the transistor device **210,** cause actuation of the electromechanical connector 25 in accordance with the request **222.**

Example 2. The computer system **300** of example 1, wherein the request **222** is a request to actuate the electromechanical connector **25** by opening the electromechanical connector **25.**

Example 3. The computer system **300** of example 1, wherein the request **222** is a request to actuate the electromechanical connector **25** by closing the electromechanical connector **25.**

Example 4. The computer system **300** of example 3, wherein the processing circuitry **310** is further configured to: obtain an indication of the electromechanical connector **25** being closed, and responsive to the indication, control the transistor device **210** to permit electrical connection between the load **12,** the at least one battery pack **100** and the electromechanical connector **25.**

Example 5. The computer system **300** of example 4, wherein the processing circuitry **310** is further configured to: obtain an indication of the electromechanical connector **25** being closed by sensing a voltage level above a voltage threshold between the transistor device **210** and the electromechanical connector **25.**

Example 6. The computer system **300** of any one of example 1 to 5, wherein the processing circuitry **310** is further configured to: obtain a load current ***i*₁₂** between the at least one battery pack **100** and the load **12,** responsive to the load current ***i*₁₂** being above a first predetermined threshold **233** during a first predetermined time ***T*₂₃₃**, control the transistor device **210** to prevent electrical connection between the load **12,** the at least one battery pack **100** and the electromechanical connector **25.**

Example 7. The computer system **300** of any one of example 1 to 6, wherein the transistor device **210** is arranged between the electromechanical connector **25** and the at least one battery pack **100,** forming part of the at least one battery pack **100.**

Example 8. The computer system **300** of any one of example 1 to 6, wherein the transistor device **210** is arranged between the electromechanical connector **25** and the load **12,** forming part of the load **12.**

Example 9. The computer system **300** of example 1, wherein the request **222** is a request to actuate the electromechanical connector **25** by closing the electromechanical connector **25;** wherein the processing circuitry **310** is further configured to: obtain an indication of the electromechanical connector **25** being closed, and responsive to the indication, control the transistor device **210** to permit electrical connection between the load **12,** the at least one battery pack **100** and the electromechanical connector **25;** wherein the processing circuitry **310** is further configured to: obtain an indication of the electromechanical connector **25** being closed by sensing a voltage level above a voltage threshold between the transistor device **210** and the electromechanical connector **25;** wherein the processing circuitry **310** is further configured to: obtain a load current ***i*₁₂** between the at least one battery pack **100** and the load **12,** responsive to the load current ***i*₁₂** being above a first predetermined threshold **233** during a first predetermined time ***T*₂₃₃**, control the transistor device **210** to prevent electrical connection between the load **12,** the at least one battery pack **100** and the electromechanical connector **25;** wherein the transistor device **210** is arranged between the electromechanical connector **25** and the at least one battery pack **100,** forming part of the at least one battery pack **100.**

Example 10. A battery pack **100** configured to be connected to a load **12** via an electromechanical connector **25,** the battery pack **100** comprising the computer system **300** of any of example 1 to 7, at least one battery cell **110** and a transistor device **210** arranged to control an electrical connection between the load **12** and the at least one battery cell **110.**

Example 11. The battery pack **100** of example 10, wherein the transistor device **210** is configured as normally open, NO.

Example 12. The battery pack **100** of example 11, wherein the transistor device **210** is configured to prevent electrical connection between the load **12** and the at least one battery cell **110** unless an indication of the electromechanical connector **25** being closed is obtained.

Example 13. An energy storage system **20** configured to be connected to a load **12** via an electromechanical connector **25,** the energy storage system **20** comprising: at least one battery pack **100,** a transistor device **210** configured to control an electrical connection between the load **12,** the at least one battery pack **100** and the electromechanical connector **25,** and the computer system **300** of any of example 1 to 6.

Example 14. The energy storage system **20** of example 13, wherein the battery pack 100 is the battery pack **100** of any one of examples 10 to 12.

Example 15. A vehicle **10** comprising the energy storage system **20** of example 13 or 14.

Example 16. A computer implemented method **400** comprising: obtaining **410,** by processing circuitry **310** of a computer system **300,** a request **222** indicating that an electromechanical connector **25** arranged to selectively connect at least one battery pack **100** to a load **12** is to be actuated; responsive to the request **222,** cause control **420** of, by processing circuitry **310** of the computer system **300,** a transistor device **210** configured to control an electrical connection between the load **12,** the at least one battery pack **100** and the electromechanical connector **25** to prevent electrical connection between the electromechanical connector **25** and the load **12** and/or the at least one battery pack **100,** and after controlling the transistor device **210,** causing actuation **430,** by processing circuitry **310** of the computer system **300,** of the electromechanical connector **25** in accordance with the request **222.**

Example 17. The computer implemented method **400** of example 16, wherein the request **222** is a request to actuate the electromechanical connector **25** by closing the electromechanical connector **25** and the method further comprises: obtaining, by processing circuitry **310** of the computer system **300,** an indication of the electromechanical connector **25** being closed, and responsive to the indication, controlling, by processing circuitry **310** of the computer system **300,** the transistor device **210** to permit electrical connection between the load **12,** the at least one battery pack **100** and the electromechanical connector **25.**

Example 18. The computer implemented method **400** of example 16 or 17, further comprising: obtaining, by processing circuitry **310** of the computer system **300,** a load current ***i*₁₂** between the at least one battery pack **100** and the load **12,** determining, by processing circuitry **310** of the computer system **300,** that to the load current ***i*₁₂** being above a first predetermined threshold **233** during a first predetermined time ***T*₂₃₃**; and controlling, by processing circuitry **310** of the computer system **300,** the transistor device **210** to prevent electrical connection between the load **12,** the at least one battery pack **100** and the electromechanical connector **25.**

Example 19. A computer program product **500** comprising program code **710** for performing, when executed by processing circuitry **310,** the computer implemented method **400** of any one of examples 16 to 18.

Example 20. A non-transitory computer-readable storage medium **600** comprising instructions **710,** which when executed by processing circuitry **310,** cause the processing circuitry **310** to perform the computer implemented method **400** of any one of examples 16 to 18.

Example 21. A sequential control circuitry **200** configured to: obtain a request **222** indicating that an electromechanical connector **25** arranged to selectively connect at least one battery pack **100** to a load **12** is to be actuated; and responsive to the request, cause control of a transistor device **210** configured to control an electrical connection between the load **12,** the at least one battery pack **100** and the electromechanical connector **25** to prevent electrical connection between the electromechanical connector **25** and the load **12** and/or the at least one battery pack **100.**

Example 22. The sequential control circuitry **200** of example 21, wherein the request **222** is a request to actuate the electromechanical connector **25** by opening the electromechanical connector **25.**

Example 23. The sequential control circuitry **200** of example 21, wherein the request **222** is a request to actuate the electromechanical connector **25** by closing the electromechanical connector **25.**

Example 24. The sequential control circuitry **200** of example 23, further configured to: obtain an indication of the electromechanical connector **25** being closed, and responsive to the indication, control the transistor device **210** to permit electrical connection between the load **12,** the at least one battery pack **100** and the electromechanical connector 25.

Example 25. The sequential control circuitry **200** of example 24, further configured to configured control the transistor device **210** to permit electrical connection between the load **12,** the at least one battery pack **100** and the electromechanical connector **25** by providing a pre-charge current to the load **12.**

Example 26. The sequential control circuitry **200** of example 25, wherein the pre-charge current is provided by pulse width modulation (PWM) control of the transistor device **210.**

Example 26. The sequential control circuitry **200** of example 25, wherein the pre-charge current is provided by linear control of the transistor device **210.**

Example 27. The sequential control circuitry **200** of any one of example 24 to 26, wherein the processing circuitry **310** is further configured to: obtain an indication of the electromechanical connector **25** being closed by sensing a voltage level above a voltage threshold between the transistor device **210** and the electromechanical connector **25.**

Example 28. The sequential control circuitry **200** of any one of examples 21 to 27, further configured to, and after controlling the transistor device **210,** cause actuation of the electromechanical connector **25** in accordance with the request **222.**

Example 29. A battery pack **100** comprising the sequential control circuitry **200** of any one of examples 21 to 28.

Example 30. An energy storage system **20** comprising the sequential control circuitry **200** of any one of examples 21 to 29.

Example 31. A vehicle **10** comprising the sequential control circuitry **200** of any one of examples 21 to 29.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system **(300)** comprising processing circuitry **(310)** configured to:
obtain a request **(222)** indicating that an electromechanical connector **(25)** arranged to selectively connect at least one battery pack **(100)** to a load **(12)** is to be actuated;
responsive to the request, cause control of a transistor device **(210)** configured to control an electrical connection between the load **(12),** the at least one battery pack **(100)** and the electromechanical connector **(25)** to prevent electrical connection between the electromechanical connector **(25)** and the load **(12)** and/or the at least one battery pack **(100);** and
after controlling the transistor device **(210),** cause actuation of the electromechanical connector **(25)** in accordance with the request **(222).**

2. The computer system **(300)** of claim 1, wherein the request **(222)** is a request to actuate the electromechanical connector **(25)** by closing the electromechanical connector **(25)** and the processing circuitry **(310)** is further configured to:
obtain an indication of the electromechanical connector **(25)** being closed, and
responsive to the indication, control the transistor device **(210)** to permit electrical connection between the load **(12),** the at least one battery pack **(100)** and the electromechanical connector **(25).**

3. The computer system **(300)** of claim 2, wherein the processing circuitry **(310)** is further configured to:
obtain an indication of the electromechanical connector **(25)** being closed by sensing a voltage level above a voltage threshold between the transistor device **(210)** and the electromechanical connector **(25).**

4. The computer system **(300)** of any one of claim 1 to 3, wherein the processing circuitry **(310)** is further configured to:
obtain a load current (***i*₁₂**) between the at least one battery pack **(100)** and the load **(12),**
responsive to the load current (***i*₁₂**) being above a first predetermined threshold **(233)** during a first predetermined time (***T*₂₃₃**), control the transistor device **(210)** to prevent electrical connection between the load **(12),** the at least one battery pack **(100)** and the electromechanical connector **(25).**

5. The computer system **(300)** of any one of claim 1 to 4, wherein the transistor device **(210)** is arranged between the electromechanical connector **(25)** and the at least one battery pack **(100),** forming part of the at least one battery pack **(100).**

6. The computer system **(300)** of any one of claim 1 to 4, wherein the transistor device **(210)** is arranged between the electromechanical connector **(25)** and the load **(12),** forming part of the load **(12).**

7. The computer system **(300)** of claim 1wherein the request **(222)** is a request to actuate the electromechanical connector **(25)** by closing the electromechanical connector **(25)** and the processing circuitry **(310)** is further configured to: obtain an indication of the electromechanical connector **(25)** being closed, and responsive to the indication, control the transistor device **(210)** to permit electrical connection between the load **(12),** the at least one battery pack **(100)** and the electromechanical connector **(25);** wherein the processing circuitry **(310)** is further configured to: obtain an indication of the electromechanical connector **(25)** being closed by sensing a voltage level above a voltage threshold between the transistor device **(210)** and the electromechanical connector **(25);** wherein the processing circuitry **(310)** is further configured to: obtain a load current (***i*₁₂**) between the at least one battery pack **(100)** and the load **(12),** responsive to the load current (***i*₁₂**) being above a first predetermined threshold **(233)** during a first predetermined time (***T*₂₃₃**), control the transistor device **(210)** to prevent electrical connection between the load **(12),** the at least one battery pack **(100)** and the electromechanical connector **(25);** wherein the transistor device **(210)** is arranged between the electromechanical connector **(25)** and the at least one battery pack **(100),** forming part of the at least one battery pack **(100);** and wherein the battery pack **(100)** is a propulsion battery pack for a vehicle **(10).**

8. A battery pack **(100)** configured to be connected to a load **(12)** via an electromechanical connector **(25),** the battery pack **(100)** comprising the computer system **(300)** of any of claim 1 to 7, at least one battery cell **(110)** and a transistor device **(210)** arranged to control an electrical connection between the load **(12)** and the at least one battery cell **(110).**

9. An energy storage system **(20)** configured to be connected to a load **(12)** via an electromechanical connector **(25),** the energy storage system **(20)** comprising:
at least one battery pack **(100),**
a transistor device **(210)** configured to control an electrical connection between the load **(12),** the at least one battery pack **(100)** and the electromechanical connector **(25),** and
the computer system **(300)** of any of claim 1 to 7.

10. The energy storage system **(20)** of claim 9, wherein the battery pack **(100)** is the battery pack **(100)** of claim 8.

11. A vehicle **(10)** comprising the energy storage system **(20)** of claim 10.

12. A computer implemented method **(400)** comprising:
obtaining **(410),** by processing circuitry **(310)** of a computer system **(300),** a request **(222)** indicating that an electromechanical connector **(25)** arranged to selectively connect at least one battery pack **(100)** to a load **(12)** is to be actuated;
responsive to the request **(222),** cause control **(420)** of, by processing circuitry **(310)** of the computer system **(300),** a transistor device **(210)** configured to control an electrical connection between the load **(12),** the at least one battery pack **(100)** and the electromechanical connector **(25)** to prevent electrical connection between the load **(12),** the at least one battery pack **(100)** and the electromechanical connector **(25);** and
after controlling the transistor device **(210),** causing actuation **(430),** by processing circuitry **(310)** of the computer system **(300),** of the electromechanical connector **(25)** in accordance with the request **(222).**

13. The computer implemented method **(400)** of claim 12, wherein the request **(222)** is a request to actuate the electromechanical connector **(25)** by closing the electromechanical connector **(25)** and the method further comprises:
obtaining, by processing circuitry **(310)** of the computer system **(300),** an indication of the electromechanical connector **(25)** being closed, and
responsive to the indication, controlling, by processing circuitry **(310)** of the computer system **(300),** the transistor device **(210)** to permit electrical connection between the load **(12),** the at least one battery pack **(100)** and the electromechanical connector **(25).**

14. A computer program product **(500)** comprising program code **(710)** for performing, when executed by processing circuitry **(310),** the computer implemented method **(400)** of any one of claims 12 or 13.

15. A non-transitory computer-readable storage medium **(600)** comprising instructions **(710),** which when executed by processing circuitry **(310),** cause the processing circuitry **(310)** to perform the computer implemented method **(400)** of any one of claims 12 or 13.

## Amended claims

### Amended claims in accordance with Rule 137(2) EPC.

1. A battery pack (**100**) configured to be connected to a load (**12**) via an electromechanical connector (**25**), the battery pack (**100**) comprising a computer system (**300**), at least one battery cell (**110**) and a transistor device (**210**) arranged to control an electrical connection between the load (**12**) and the at least one battery cell (**110**), the computer system (**300**) comprising processing circuitry (**310**) configured to:
obtain a request (**222**) indicating that an electromechanical connector (**25**) arranged to selectively connect at least one battery pack (**100**) to a load (**12**) is to be actuated;
responsive to the request, cause control of a transistor device (**210**) configured to control an electrical connection between the load (**12**), the at least one battery pack (**100**) and the electromechanical connector (**25**) to prevent electrical connection between the electromechanical connector (**25**) and the load (**12**) and/or the at least one battery pack (**100**); and
after controlling the transistor device (**210**), cause actuation of the electromechanical connector (**25**) in accordance with the request (**222**)
wherein the request (**222**) is a request to actuate the electromechanical connector (**25**) by closing the electromechanical connector (**25**) and the processing circuitry (**310**) is further configured to:
obtain an indication of the electromechanical connector (**25**) being closed, and
responsive to the indication, control the transistor device (**210**) to permit electrical connection between the load (**12**), the at least one battery pack (**100**) and the electromechanical connector (**25**).

2. The computer system (**300**) of claim 1, wherein the processing circuitry (**310**) is further configured to:
obtain an indication of the electromechanical connector (**25**) being closed by sensing a voltage level above a voltage threshold between the transistor device (**210**) and the electromechanical connector (**25**).

3. The battery pack (**100**) of claim 1or 2, wherein the processing circuitry (**310**) is further configured to:
obtain a load current **(*i*₁₂)** between the at least one battery pack (**100**) and the load (**12**),
responsive to the load current **(*i*₁₂)** being above a first predetermined threshold (**233**) during a first predetermined time **(*T*₂₃₃),** control the transistor device (**210**) to prevent electrical connection between the load (**12**), the at least one battery pack (**100**) and the electromechanical connector (**25**).

4. The battery pack (**100**) of any one of claim 1 to 3, wherein the transistor device (**210**) is arranged between the electromechanical connector (**25**) and the at least one battery pack (**100**), forming part of the at least one battery pack (**100**).

5. The battery pack (**100**) of any one of claim 1 to 4, wherein the transistor device (**210**) is arranged between the electromechanical connector (**25**) and the load (**12**), forming part of the load (**12**).

6. The computer system (**100**) of claim 1, wherein the request (**222**) is a request to actuate the electromechanical connector (**25**) by closing the electromechanical connector (**25**) and the processing circuitry (**310**) is further configured to: obtain an indication of the electromechanical connector (**25**) being closed, and responsive to the indication, control the transistor device (**210**) to permit electrical connection between the load (**12**), the at least one battery pack (**100**) and the electromechanical connector (**25**); wherein the processing circuitry (**310**) is further configured to: obtain an indication of the electromechanical connector (**25**) being closed by sensing a voltage level above a voltage threshold between the transistor device (**210**) and the electromechanical connector (**25**); wherein the processing circuitry (**310**) is further configured to: obtain a load current **(*i*₁₂)** between the at least one battery pack (**100**) and the load (**12**), responsive to the load current **(*i*₁₂)** being above a first predetermined threshold (**233**) during a first predetermined time **(*T*₂₃₃),** control the transistor device (**210**) to prevent electrical connection between the load (**12**), the at least one battery pack (**100**) and the electromechanical connector (**25**); wherein the transistor device (**210**) is arranged between the electromechanical connector (**25**) and the at least one battery pack (**100**), forming part of the at least one battery pack (**100**); and wherein the battery pack (**100**) is a propulsion battery pack for a vehicle (**10**).

7. An energy storage system (**20**) configured to be connected to a load (**12**) via an electromechanical connector (**25**), the energy storage system (**20**) comprising:
at least one battery pack (**100**) of any of claim 1 to 6.

8. A vehicle (**10**) comprising the energy storage system (**20**) of claim 7.

9. A computer implemented method (**400**) comprising:
obtaining (**410**), by processing circuitry (**310**) of a computer system (**300**), a request (**222**) indicating that an electromechanical connector (**25**) arranged to selectively connect at least one battery pack (**100**) to a load (**12**) is to be actuated;
responsive to the request (**222**), cause control (**420**) of, by processing circuitry (**310**) of the computer system (**300**), a transistor device (**210**) configured to control an electrical connection between the load (**12**), the at least one battery pack (**100**) and the electromechanical connector (**25**) to prevent electrical connection between the load (**12**), the at least one battery pack (**100**) and the electromechanical connector (**25**); and
after controlling the transistor device (**210**), causing actuation (**430**), by processing circuitry (**310**) of the computer system (**300**), of the electromechanical connector (**25**) in accordance with the request (**222**),
wherein the request (**222**) is a request to actuate the electromechanical connector (**25**) by closing the electromechanical connector (**25**) and the method further comprises:
obtaining, by processing circuitry (**310**) of the computer system (**300**), an indication of the electromechanical connector (**25**) being closed, and
responsive to the indication, controlling, by processing circuitry (**310**) of the computer system (**300**), the transistor device (**210**) to permit electrical connection between the load (**12**), the at least one battery pack (**100**) and the electromechanical connector (**25**).

10. A computer program product (**500**) comprising program code (**710**) for performing, when executed by processing circuitry (**310**), the computer implemented method (**400**) of claim 9.

11. A non-transitory computer-readable storage medium (**600**) comprising instructions (**710**), which when executed by processing circuitry (**310**), cause the processing circuitry (**310**) to perform the computer implemented method (**400**) of claim 9.
